(19) Europäisches Patentamt

European Patent Office

Office européen des brevets

(11) EP 0 803 869 A1

(12) **EUROPEAN PATENT APPLICATION**

(43) Date of publication:
29.10.1997 Bulletin 1997/44

(51) Int Cl.$^6$: **G11B 7/135**

(21) Application number: **97301721.3**

(22) Date of filing: **14.03.1997**

(84) Designated Contracting States:
**DE FR GB IT**

(30) Priority: **25.03.1996 KR 9608159**

(71) Applicant: **LG ELECTRONICS INC.**
**Seoul (KR)**

(72) Inventors:
- **Kim, Jin-Yong**
 **Sungnam-si, Kyungki-do (KR)**
- **Park, Song Chan**
 **Anyang-si, Kyungki-do (KR)**

(74) Representative:
**Cross, Rupert Edward Blount et al**
**BOULT WADE TENNANT,**
**27 Furnival Street**
**London EC4A 1PQ (GB)**

(54) **Optical pickup apparatus for both CD and DVD**

(57) An optical pickup apparatus capable of recording and reproducing data on different disc type which includes a fixed part for generating beam and outputting the beam and a moving part for focusing and tracking the beam onto the disc is disclosed, including a light source; a beam splitter for transmitting and reflecting the beam according to a polarization of the beam generated by the light source; a collimating lens (13) for making the beam transmitted by the beam splitter parallel beam; a liquid crystal unit for controlling a polarization direction of the parallel beam passed through the collimating lens; a polarizing plate for adjusting flux of the beam passed through the liquid crystal unit; an objective lens for focusing on an optical disc the beam passed through the polarizing plate; an actuator for supporting the objective lens and the polarizing plate and carrying out focusing and tracking; and a photodetector for detecting the beam reflected against the beam splitter by the beam which is reflected against the optical disc and then comes back through an incident path.

FIG.3

**Description**

BACKGROUND OF THE INVENTION

Field of the Invention

The present invention relates to an optical pickup apparatus and, more particularly, to an optical pickup apparatus for both a compact disc (CD) and a digital video disc (DVD).

Discussion of the Related Art

A numerical aperture of an objective lens is adjusted according to what kind of optical disc is used so that both a CD and a DVD of different recording densities and different thicknesses are used by one optical pickup system. For example, an optical pickup system suitable for reproducing a 0.6 mm thick DVD, an optical pickup system of which the optical performance is revised to be almost next to a system without aberration, has the following problems when it tries to reproduce a 1.2 mm thick CD.

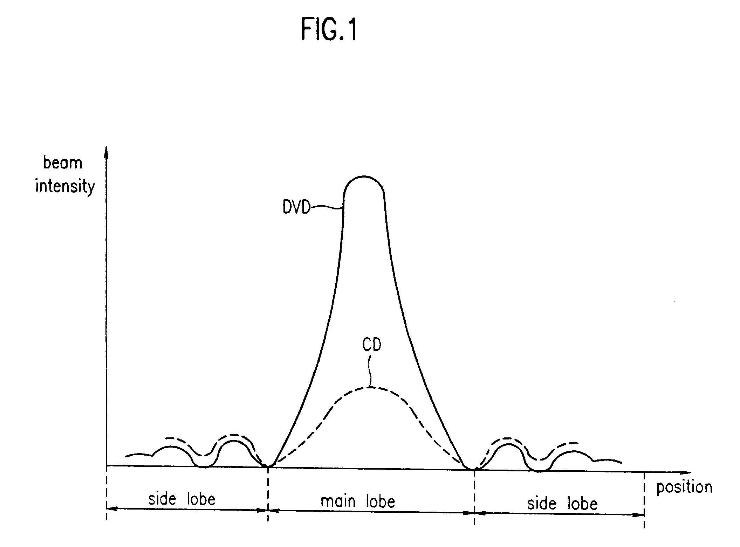

As shown in Fig. 1 showing beam intensity distribution in a DVD and a CD having different thicknesses in an optical pickup system, a DVD has a high beam intensity in a main lobe and a relatively-low beam intensity in a side lobe. In contrast, a CD has a low beam intensity in the main lobe and a relatively-high beam intensity in the side lobe. Thus, crosstalk is generated and a spherical aberration is caused by change of the thickness of an optical disc, and a signal/noise (S/N) ratio is worsened. Moreover, there are generated a coma aberration generated by a slant of the optical pickup system and an astigmatism having 2 focuses, thus increasing the instability of the optical pickup system, and worsening optical properties. As a result, information recorded on the 1.2 mm CD can not be read. At this time, with regard to a spherical aberration (SA), a coma aberration (CA), and a defocus aberration (DA) submit to the following formulas:

$$SA = \frac{\Delta d}{8} \cdot \frac{n^2-1}{n^3} \cdot NA^4 \qquad (1)$$

$$CA = \frac{\Delta d}{2} \cdot \frac{\left(n^2-1\right)SIN\theta COS\theta}{\left(n^2-SIN^2\theta\right)^{5/2}} \cdot NA^3 \qquad (2)$$

$$DA = \frac{1}{4\sqrt{3}} \cdot NA^2 \cdot \Delta Z \qquad (3)$$

Herein, $\Delta d$ is the difference of thicknesses of the optical disc, n is its refractive index, NA is a numerical aperture of the objective lens, $\Delta Z$ is the amount of defocus, and $\theta$ is an inclination of the optical disc.

When the optical pickup system, designed to obtaining non-aberration, reproduces a 1.2 mm thick CD, maintaining the numerical aperture in conditions that n is 1.54, a used wave $\lambda$ is 0.64 $\mu$m, and a thickness of the optical disc is 0.6 mm in the formula 1, the spherical aberration is 0.43 $\lambda$ which is the wave aberration root mean square(RMS) according to 0.6 mm which is the difference between the thicknesses of the CD and the DVD. At this time, if the numerical aperture changes 0.35, the spherical aberration becomes 0.048 $\lambda$ which is the wave aberration RMS, and The DA is revised not to exist in 31.67 $\lambda$ so that it becomes less than 0.07 $\lambda$ which is Marechal's criterion.

Also, the inclination of the optical disc has latitude twice as the general CD or more by means of change of the numerical aperture, thereby enabling stability of the optical pickup system.

However, the increase of the numerical aperture brings about the increase of the spherical aberration. The decrease of the numerical aperture causes the increase of the spot of beam focused on the optical disc. As a result, the change of the numerical aperture changes the S/N ratio. As a result, the effective numerical aperture is in a range of between 0.25 and 0.38.

A conventional optical pickup system for reproducing a CD and a DVD will be explained below.

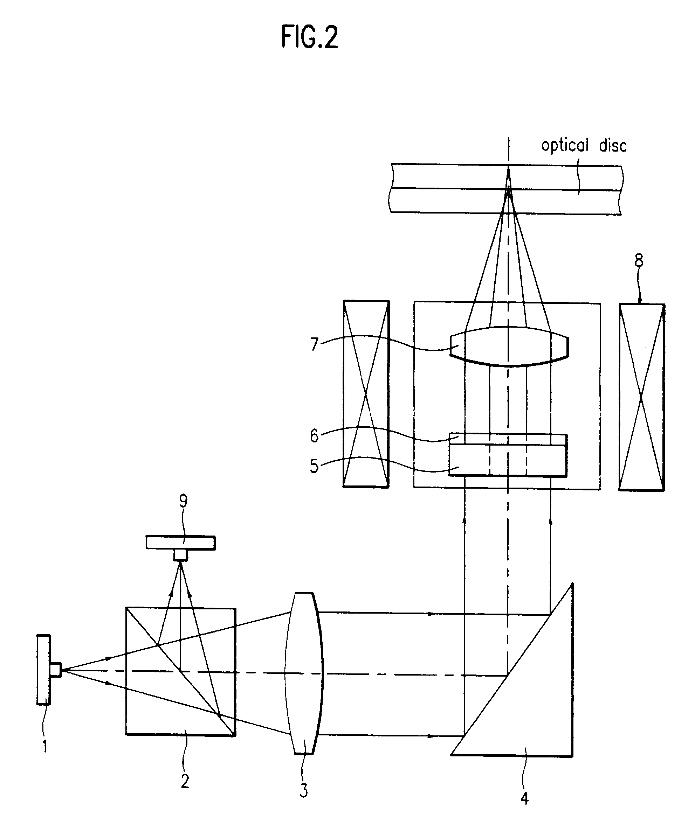

Fig. 2 shows the entire structure of a conventional optical pickup system for both a CD and a DVD. The conventional optical pickup system includes a light source 1, a beam splitter 2, a collimating lens 3, a right-angled prism 4, a liquid crystal shutter 5, a polarizing plate 6, an objective lens 7, an actuator 8, and a photodetector 9.

Operations of the optical pickup system having the aforementioned structure will be explained.

Beam coming from the light source 1 passes through the beam splitter 2 and then is outputted in parallel by means of the collimating lens 3. The beam outputted in parallel is reflected against the right-angled prism 4 and then is incident forward the liquid crystal shutter 5 and the polarizing plate 6 which are mounted inside the actuator which vibrates for focusing and tracking. The polarizing plate 6 adjusts a diameter of flux of light so as to make the beam incident to the objective lens 7, thus changing the effective numerical aperture of the objective lens 7.

The incident beam through the objective lens 7 is focused on the optical disc, so as to be reflected or diffracted by means of the information medium recorded on the information-recording side of the optical disc. The beam reflected against the optical disc passes through the objective lens 7, the polarizing plate 6, the liquid crystal shutter 5, the right-angled prism 4, the collimating lens 3, and the beam splitter 2, and then have a changed beam path toward the photodetector 9 by the beam splitter 2. Then, the photodetector 9 focuses the reflected beam, thus detecting data signals of the beam.

Since, in the conventional optical pickup system for both a CD and a DVD, the liquid crystal shutter 5 and the polarizing plate 6 for changing the numerical aperture of the objective lens 7 are mounted inside the actuator 8 for tracking and focusing servo, the weight of the actuator 8 is heavier. Therefore, the high speed vibration characteristics of the actuator 8 which has to vibrate finely in a high speed for focusing and tracking are worsened, so that servo operation of tracking and focusing becomes inferior and that wires (not shown) supporting the actuator 8 may be easily impaired. Furthermore, the vibration of the actuator 8 is interfered by the wires for the supply of power which has to be applied to the liquid crystal shutter 5 to be operated.

SUMMERY OF THE INVENTION

Accordingly it would be desirable to provide an optical pickup system for both a CD and a DVD that substantially obviates one or more of problems due to limitations and disadvantages of the related art.

It would also be desirable to provide an optical pickup system for both a CD and a DVD in which the weight of an actuator is lighter for improving high speed characteristics of the focusing and tracking.

Particular features and advantages of preferred embodiments of the invention will be set forth in the description which follows and - in part will be apparent from the description, or may be learned by practice of the invention. The objectives and other advantages of these embodiments will be realized and attained by the structure particularly pointed out in the written description and claims hereof as well as the appended drawings.

To achieve these and other advantages and in accordance with a first aspect of the present invention, there is provided an optical pickup system for both a CD and a DVD which includes fixing part for generating beam and outputting the beam in parallel, and an operating part for adjusting a numerical aperture includes a polarization direction controlling part mounted in a predetermined place of the fixing part and adjusting a polarization direction of the beam, and a beam flux controlling part mounted in the operating part and adjusting a size of beam flux by blocking a portion of the beam passed through the polarization direction controlling part according to its polarization direction.

It is to be understood that both the foregoing general description and the following detailed description are exemplary and explanatory and are intended to provide further explanation of the invention as claimed.

BRIEF DESCRIPTION OF THE DRAWINGS

These and various other objects, features, and advantages of the present invention will be readily understood with reference to the following detailed description read in conjunction with the accompanying drawings, in which:

Fig. 1 shows the beam intensity distribution in a CD and a DVD having different thicknesses in a general optical pickup system;

Fig. 2 shows the optical systemical structure of a conventional optical pickup system for both a CD and a DVD;

Fig. 3 shows the optical systemical structure of an optical pickup system for both a CD and a DVD embodying the invention;

Fig. 4 is a block perspective view showing the detailed structure of a liquid crystal unit and a polarizing plate shown in Fig. 3;

Fig. 5a shows a transmitting state of the light incident to the liquid crystal unit when a voltage is not applied to a liquid crystal layer of Fig. 4; and

Fig. 5b shows a transmitting state of the light incident to the liquid crystal unit when a voltage is applied to the liquid crystal layer of Fig. 4.

DETAILED DESCRIPTION OF THE PREFERRED EMBODIMENTS

Reference will now be made in detail to the preferred embodiments of the present invention, examples of which are illustrated in the accompanying drawings.

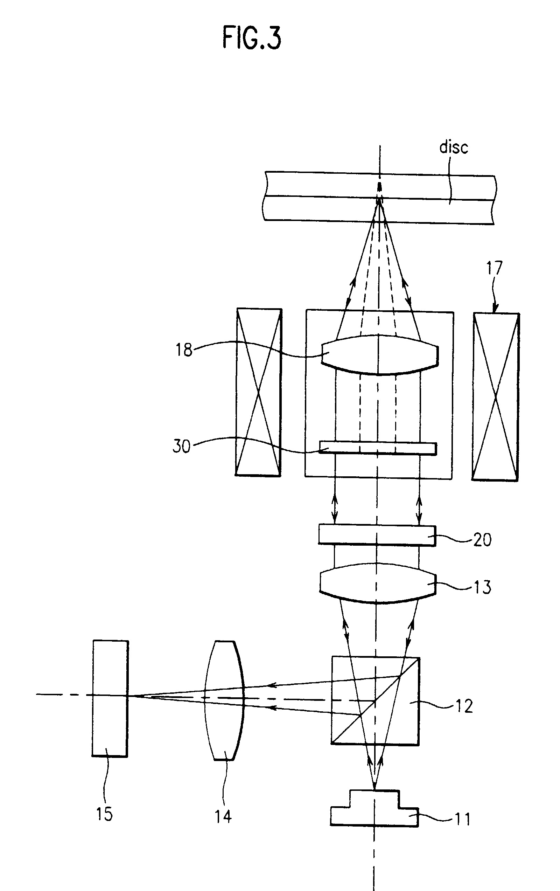

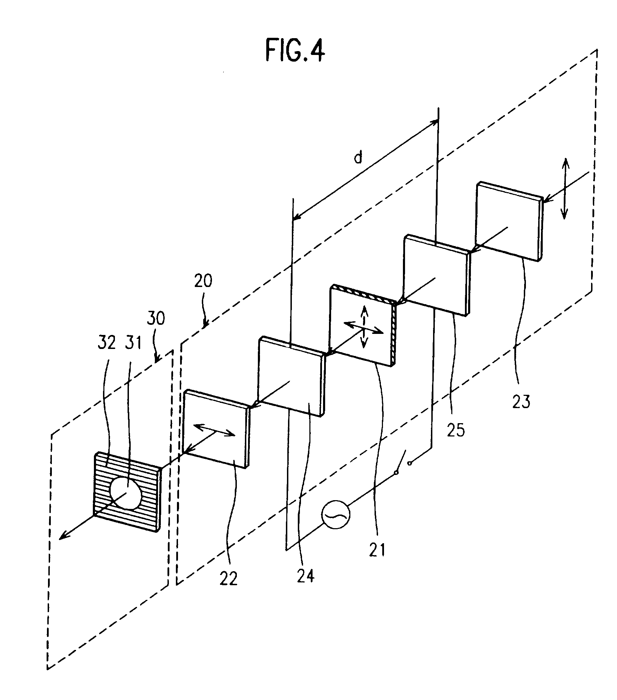

Fig. 3 shows the optical systemical structure of an optical pickup system for both a CD and a DVD embodying the invention, and Fig. 4 is a block perspective view showing the detailed structure of a liquid crystal unit and a polarizing plate.

According to an embodiment of the invention, an optical pickup system for both a CD and a DVD includes a light source 1 generating beam of predetermined wave lengths; a beam splitter 12 for transmitting the beam of a predetermined polarization and reflecting the beam of another predetermined polarization; a collimating lens 13 for making parallel the beam transmitted by the beam splitter 12; a liquid crystal unit 20 for controlling a polarization direction of the parallel beam passed through the collimating lens 13; a polarizing plate 30 placed inside an actuator 17 and adjusting the flux of the beam passed through the liquid crystal unit 20; an objective lens 18 for focusing on an information-recording side of an optical disc the beam passed through the polarizing plate 30; a sensor lens 14 for receiving the beam reflected against the information-recording side through the objective lens 18, the polarizing plate 30, the liquid crystal unit 20, and the collimating lens 13, so as to focus information; and a photodetector 15 for detecting the beam focused on the sensor lens 14 and converting it into an electrical signal.

At this time, while the operating part is composed of the actuator 17 including the objective lens 18 and the polarizing plate 30, the fixing part is composed of the light source 11, the beam splitter 12, the collimating lens 13, and the liquid crystal unit 20.

Operations of the optical pickup system for both a CD and a DVD having the aforementioned structure will be explained below.

Beam generated by the light source 11 passes through the beam splitter 12 and is outputted as parallel beam by means of the collimating lens 13 and then is incident into the liquid crystal unit 20. There is placed a liquid crystal layer 21 between transparent electrodes 24 and 25 which are placed between transparent plates 22 and 23 in the liquid unit 20.

In the liquid crystal unit 20, a polarization direction of incident beam is twisted by 90° when power is not applied to the liquid crystal layer 21. In contrast, when power is applied to the liquid crystal layer 21, the incident beam passes through without change of its polarization direction.

In this embodiment, the liquid crystal unit 20 is placed in a beam path between the collimating lens 13 and the objective lens 18. But as long as the liquid crystal unit 20 is placed in the fixing part of the optical pickup system, it can be placed anywhere in the beam path.

The formula right below is about a thickness d of the liquid crystal layer 21 in the liquid crystal unit 20. With regard to a wave $\lambda$, when a refractive index of an ordinary beam is No, and one of an extraordinary beam is Ne, and the difference between Ne and No is $\delta n$, d is submissive to the following formula:

$$d = \sqrt{(2m)^2 - 1} \, \frac{\lambda}{2} \, \delta n \qquad (4)$$

Herein, m is a constant. When m is 1, the polarization direction is changed by 90°.

The polarization direction of the parallel beam, which has passed through the collimating lens 13, is controlled by the liquid crystal unit 20, thus going to the polarizing plate 30 belonging to the operating part.

In the center of the polarizing plate 30, there is formed a non-polarizing portion 31 of a circle form of a predetermined diameter which allows beam to pass regardless of its polarization direction. And in its other portion, a polarizing portion 32 is formed to allow beam of a predetermined polarization direction to pass. At this time, since the non-polarizing and polarizing portions 31 and 32 of the polarizing plate 30 have a same thickness, they don't have any difference between the paths of the beams which have passed through the portions 31 and 32, respectively.

Operations of the liquid crystal unit 20 and the polarizing place 30 can be known through Fig. 4 in details. The beam which has passed through the beam splitter 12 and the collimating lens 13 is incident to the liquid crystal unit 20 in a vertical polarization direction.

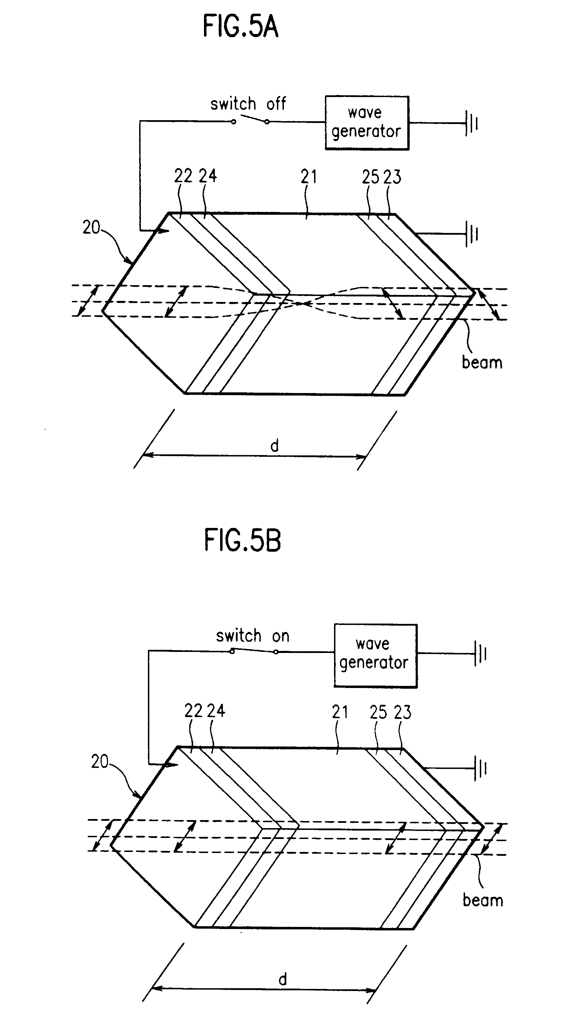

Herein, if power, as shown in Fig. 5a, has not been applied to the transparent electrodes 24 and 25 of the liquid crystal unit 20, the beam incident to the liquid crystal unit 20 in a vertical polarization direction is outputted to be turned by 90° in comparison with an incident beam. The beam outputted from the liquid crystal unit 20 in a polarization state passes through the polarizing and non-polarizing portions 32 and 31 of the polarizing plate 30 and then the objective lens 18, and then is focused on the optical disc.

On the other hand, as shown in Fig. 5b, if power has been applied to the transparent electrodes 24 and 25 of the liquid crystal unit 20, the polarization direction of the beam incident to the liquid crystal unit 20 in a vertical polarization direction is not changed so that the beam is outputted in the same vertical polarization direction.

This beam outputted in the vertical polarization direction is incident to the polarizing plate 30 placed inside the actuator 17 which vibrates in a high speed, such that only it of as big as the size of the non-polarizing portion 31 passes through the objective lens 18 so as to be focused on the optical disc. In other words, while the non-polarizing portion 31 of the polarizing plate 30 allows beam to pass regardless of its polarization direction, the polarizing portion 32 doesn't allow it of a vertical polarization direction to be transmitted but allows it of only a horizontal polarization direction to ve transmitted.

Accordingly, if power is (or not) applied to the liquid crystal unit 20 according to what kind of the optical disc is used, in order to adjust a numerical aperture suitable for each of a CD or a DVD, the liquid crystal unit 20 and the polarizing plate 30 serve to adjust a size of the beam transmitted to objective lens 18, so that an optical disc of a different size can be reproduced by one optical pickup system.

As previously mentioned, since the liquid crystal unit 20 is placed in the fixing part, the weight of the actuator which should vibrate in a high speed for tracking and focusing is lighter. As a result, the high speed characteristics are improved and thus precise and rapid tracking and focusing and focusing servo can be obtained.

An optical pickup system for both a CD and a DVD of the type described has the following advantages. As previously mentioned, since a liquid crystal unit is mounted in a fixing part, the weight of an actuator which should vibrate in a high speed for tracking and focusing is lighter, thereby improving the high speed characteristics. Accordingly, it can be advantageously applied to optical disc drivers which are inclined to obtain a higher speed.

It will be apparent to those skilled in the art that various modification and variations can be made in the optical pickup system both for a CD and a DVD of the present invention without departing from the scope of the invention. Thus, it is intended that the present invention cover the modifications and variations of this invention provided they come within the scope of the appended claims and their equivalents.

## Claims

1. An optical pickup apparatus capable of recording and reproducing data on different disc type which includes a fixing part for generating beam and outputting the beam and a moving part for focusing and tracking the beam onto the disc, comprising:

means for controlling a polarization direction of the beam according to disc type, wherein means for controlling a polarization direction of the beam is mounted in the fixing part; and means for controlling a beam size by shielding a portion of the beam passed through the means for controlling the polarization direction according the polarization direction.

2. The optical pickup apparatus as claimed in claim 1, wherein the disc type is determined by its thickness or recording density.

3. The optical pickup apparatus as claimed in claim 1, wherein the means for controlling the polarization direction of the beam is liquid crystal.

4. The optical pickup apparatus as claimed in claim 1, wherein the means for controlling the beam size is polarizer which is patterned.

5. An optical pickup apparatus capable of recording and reproducing data on different disc type which includes a fixing part for generating beam and outputting the beam and a moving part for focusing and tracking the beam onto the disc, comprising:

a light source;
a beam splitter for transmitting and reflecting the beam according to a polarization of the beam generated by the light source;
a collimating lens 13 for making the beam transmitted by the beam splitter parallel beam;
a liquid crystal unit for controlling a polarization direction of the parallel beam passed through the collimating lens;
a polarizing plate for adjusting flux of the beam passed through the liquid crystal unit;
an objective lens for focusing on an optical disc the beam passed through the polarizing plate;
an actuator for supporting the objective lens and the polarizing plate and carrying out focusing and tracking; and
a photodetector for detecting the beam reflected against the beam splitter by the beam which is reflected against the optical disc and then comes back through an incident path.

6. The optical pickup apparatus as claimed in claim 5, wherein said liquid crystal unit is formed between the beam splitter and the collimating lens.

7. The optical pickup apparatus as claimed in claim 5, wherein said liquid crystal unit is formed between the light source and the beam splitter.

8. The optical pickup apparatus as claimed in claim 5, wherein said liquid crystal unit is formed between the collimating lens and the polarizing plate.

9. The optical pickup apparatus as claimed in claim 5, wherein, in the center of the polarizing plate, there is formed a non-polarizing portion of a circle form of a predetermined diameter which allows beam to pass regardless of its polarization direction, and in its other portion, a polarizing portion is formed to allow beam of a predetermined polarization direction to pass.

FIG.1

FIG.2

optical disc

# FIG.3

FIG.4

EP 0 803 869 A1

9

# FIG.5A

switch off

wave generator

22 24    21    25 23

20

beam

d

# FIG.5B

switch on

wave generator

22 24    21  25 23

20

beam

d

**European Patent Office**

## EUROPEAN SEARCH REPORT

Application Number

EP 97 30 1721

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | PATENT ABSTRACTS OF JAPAN vol. 017, no. 563 (P-1628), 12 October 1993 & JP 05 159402 A (SANYO ELECTRIC CO LTD), 25 June 1993, * abstract * | 1-4 | G11B7/135 |
| A | | 5 | |
| X | PATENT ABSTRACTS OF JAPAN vol. 018, no. 417 (P-1781), 4 August 1994 & JP 06 124477 A (SANYO ELECTRIC CO LTD), 6 May 1994, * abstract * | 1-4 | |
| A | | 5 | |
| X | PATENT ABSTRACTS OF JAPAN vol. 018, no. 522 (P-1808), 30 September 1994 & JP 06 180851 A (HITACHI MAXELL LTD;OTHERS: 01), 28 June 1994, * abstract * | 1-4 | |
| | | | TECHNICAL FIELDS SEARCHED (Int.Cl.6) |
| A | EP 0 537 904 A (IBM CORP.) * claims 1,2; figure 2 * | 1-4 | G11B |
| A | ENDEL UIGA: "Optoelectronics" , PRENTICE HALL  ENGLEWOOD CLIFF , NEW JERSEY COLUMBUS OHIO XP002034939 * page 169 - page 174 * | 1 | |

The present search report has been drawn up for all claims

| Place of search | Date of completion of the search | Examiner |
|---|---|---|
| BERLIN | 10 July 1997 | Bernas, Y |

EPO FORM 1503 03.82 (P04C01)